# EUROPEAN PATENT SPECIFICATION

(11) **EP 2 559 596 B1**
(45) Date of publication and mention of the grant of the patent: **07.10.2015**
(21) Application number: 11006732.9
(22) Date of filing: 17.08.2011
(51) Int. Cl.: B60R 16/023, B60R 11/02

(54) **Quick in frame for a vehicle**
Rahmen mit Schnellverbindung für ein Fahrzeug
Cadre à pose rapide pour véhicule

(43) Date of publication of application: 20.02.2013
(73) Proprietor: Harman Becker Automotive Systems GmbH, 76307 Karlsbad (DE)
(72) Inventor: Karl, Alois, 82544 Egling-Egertshausen (DE); Pollak, Werner, 75177 Pforzheim (DE); Acker, Dieter, 75334 Straubenhardt (DE)
(74) Representative: Grünecker Patent- und Rechtsanwälte PartG mbB

(56) References cited:
- EP-A1- 1 275 993
- US-A- 4 843 477
- US-A- 5 518 412
- US-A- 5 721 669

## Description

The invention relates to a system including a mounting frame assembly for receiving a head unit in a vehicle and the head unit insertable into such a mounting frame assembly.

### Prior Art

Head units that are mounted in a vehicle may include a radio, a navigation system, and other multimedia components. While mounting such a head unit into a dashboard of a vehicle, for example, various cables or lines have to be connected to the head unit, such as lines to the speakers, lines to an antenna, lines to displays etc. In particular, such lines may also include optical cables. Some of these cables or lines may be included in connector assemblies having several connectors included in one part. These connector assemblies used in automobiles may include for example forty individual connectors.

According to the prior art, when the head units are mounted, production line workers are manually inserting the connectors and/or connector assemblies into the rear of the head unit. In order to be able to do so, the cables and lines have to be about half a meter longer than actually necessary when the head unit is located in the desired place. This has the disadvantage of an increased weight of the vehicle. Further, when inserting the head unit, cables or lines may be bent and, in particular, optical cables may fail to operate properly when the curvature radius is too small. Moreover, a color coding has to be provided to identify the proper position and/or orientation of the connectors. However, connection errors occur anyway due to human shortcomings. Finally, the manual insertion of the connectors into the head unit is time consuming.

Document EP 1 275 993 A1 shows a prior art in accordance with the preamble of claim 1 of the present invention. It discloses more particularly an optical fiber connection mechanism according to which optical devices of an optical circuit board can be connected to optical plugs by inserting the optical circuit board into an optical circuit pack assembly and securing it with a latch.

### Description of the Invention

The invention has been made to overcome one or more of the above-mentioned disadvantages.

The invention is defined by the features of claim 1.

The mounting frame assembly is fixable to the vehicle and is configured to house one or more first connector assemblies including first electrical and/or optical connectors to be connected to complimentary second electrical and/or optical connectors of the head unit, and first fixing means for interacting with second fixing means of the head unit and for forcing the head unit into the mounting frame assembly and thereby connecting respective connectors. This has the advantage that the head unit can be fixed by means of the first fixing means such that the head unit is forced into the mounting frame assembly and that thereby connectors that are placed in the mounting frame assembly are forced into corresponding connectors at the rear of the head unit. The connector assemblies have been placed in desired locations in the mounting frame assembly before the head unit is inserted. Further, the operation of the first fixing means fixes the head unit in its desired place.

The first fixing means comprises a movable first structure configured to interact with a second structure of the second fixing means of the head unit to provide a pressing force of the head unit against the first connectors when the first structure is moved. Accordingly, the head unit is forced into the mounting frame assembly by providing a pressing force of the head unit against the first connectors by using the first structure that interacts with the second structure of the head unit.

The first structure is rotatable around a joint of the mounting frame assembly and comprises a protrusion configured to by slidably received in a guide region, in particular a guide rail or a guiding channel, of the head unit. Accordingly, the protrusion of the first structure exerts a force on the guide region of the head unit and presses the head unit against the first connectors. Specifically, the guide rail may be configured such that it is curved but not centered on the joint. However, also a straight guide rail may be provided.

The first fixing means comprises a manually operable lever. This has the advantage that, during mounting the head unit, the force can be provided by operating the lever manually.

The mounting frame assembly is configured to slidably receive the head unit up to an intermediate position and to force the head unit to a final position while operating the first fixing means in a first direction and thereby connecting the one or more first connectors to the respective second connectors of the head unit. Accordingly, the mounting process for the head unit includes two steps, namely a first step wherein the head unit is inserted into the mounting frame assembly until an intermediate position is obtained, for example where the connectors begin to contact each other, and a second step wherein the head unit is moved to the intermediate position to the final position when the first fixing means is operated in a first direction, by manually moving the lever from a first position to a second position, specifically from the left to right side or vice versa.

The mounting frame assembly is further configured to force the head unit to the intermediate position while operating the first fixing means in a second direction opposite to the first direction and thereby disconnecting the one or more first connectors from the respective second connectors of the head unit, by manually moving the lever from the second position to the first position, specifically from the right to the left side or vice versa. In such a way, the head unit may easily be removed, if necessary.

In a development, the mounting frame assembly may be configured to house the first connectors in such a way that they are provided moveably in a direction transverse to an insertion direction of the head unit into the mounting frame assembly. In this development, the first connectors are not rigidly housed in the mounting frame assembly but may slightly move around (swim). In this way, the connectors, or connector assemblies, may be centered on the corresponding connectors of the head unit while the head unit is inserted.

The head unit is insertable into the mounting frame assembly. The head unit includes second electrical and/or optical connectors connectable to complimentary first electrical and/or optical connectors housed in the mounting frame assembly and a second fixing means for interacting with the first fixing means of the mounting frame assembly. The advantages of the interaction of such a head unit and the mounting frame assembly have already been discussed above, and reference is made thereto.

The head unit further comprises a second structure of the second fixing means configured to interact with the movable first structure of the mounting frame assembly to provide a pressing force of the head unit against the first connectors when the first structure is moved.

The head unit further comprises a guide region, in particular a guide rail or a guiding channel, for receiving the protrusion of the first structure.

According to another development, the head unit may comprise adjustment pins for adjusting the position of the first connectors inserted into corresponding openings of one or more first connector assemblies including the first connectors.

Further embodiments of the invention will be described in the following with relation to the figures.

### Drawings

- Figures 1A, 1B, 1C: illustrate an embodiment of a mounting frame assembly according to the invention.
- Figures 2A, 2B: illustrate an embodiment of a head unit according to the invention.

### Description of the Embodiments

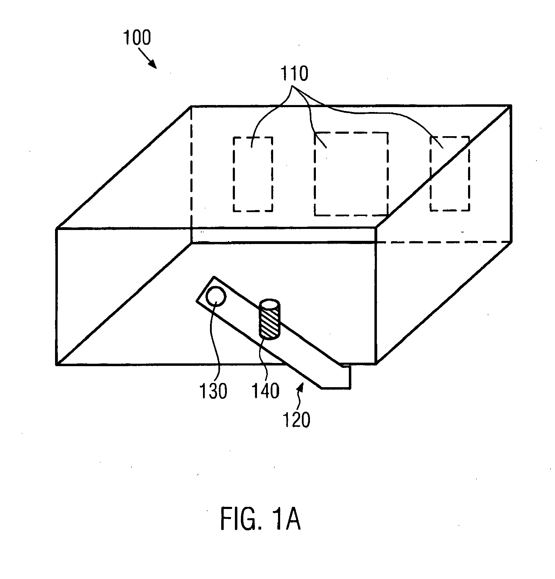

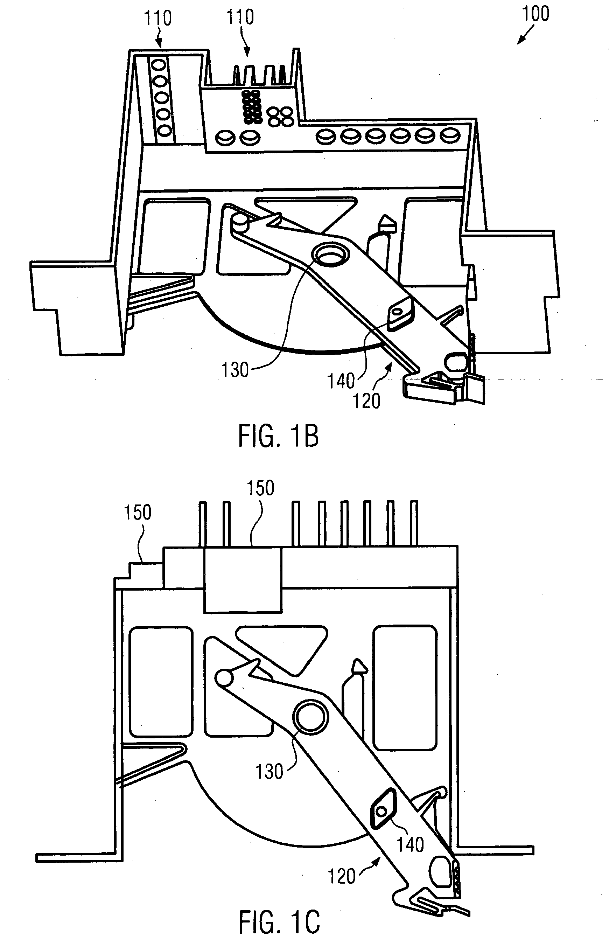

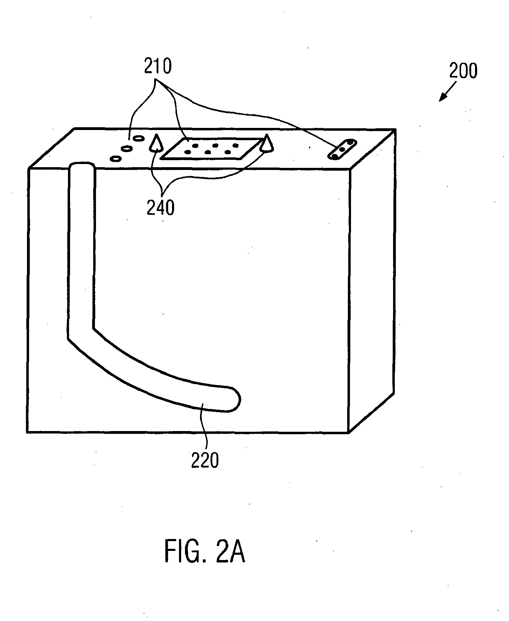

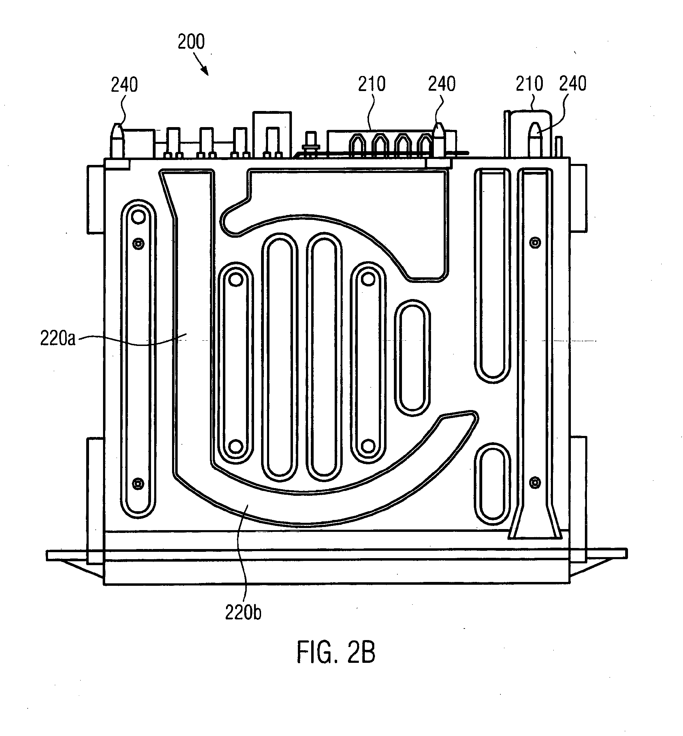

Figures 1A, 1B, 1C illustrate an embodiment of a mounting frame assembly 100 according to the invention and Figures 2A, 2B illustrate an embodiment of a head unit 200 according to the invention.

The mounting frame 100 is placed, for example, into a dashboard of a vehicle, for example in a production line. The mounting frame 100 includes regions 110 that are configured to house connector assemblies 150 that include electrical and/or optical connectors at the end of cables or lines to speakers, displays etc.. These connectors are to be connected to complimentary connectors 210 of the head unit 200. The mounting frame assembly 100 further includes a first fixing means 120 that is configured to interact with a second fixing means 220 of the head unit 200 and is configured such that operating the first fixing means 120 forces the head unit 200 into the mounting frame assembly 100 and thereby connects respective connectors 210.

In this embodiment, the first fixing means 120 comprises a moveable structure 140 that is configured to interact with a structure 220 of the head unit to provide a pressing force of the head unit against the first connectors when the first structure is moved. Specifically, in this example the first fixing means comprises a manually operable lever 120 that is rotatable around a joint 130 of the mounting frame assembly 100 and comprises a protrusion 140 that is configured to be slidably received in the guide region 220 of the head unit 200.

Moreover, when the head unit 200 is inserted into the mounting frame assembly 100, the head unit slides up to an intermediate position into the mounting frame assembly 100 while the protrusion 140 slides along the straight part 200a of the guiding region 220. In a second step, the head unit can be forced into the final position while operating the lever 120 from right to left during which operation the protrusion 140 slides along the curved part 200b of the guiding region 220 and presses the head unit 100 into its final position thereby connecting the first connector assemblies to respective second connectors 210 of the head unit. The force required to turn the lever is much smaller than the force required to directly connect the respective connectors by pressing in the head unit 200 manually, typically for example 15 N as compared to 250 N, respectively.

Moreover, when it is necessary to remove the head unit 200 from the mounting frame assembly 100, the lever 120 can be rotated about the joint 130 in the opposite direction thereby forcing the head unit 200 out of the mounting frame assembly to the intermediate position and disconnecting the connectors 210 from the connector assemblies that are provided in the regions 110.

The head unit 200 may further comprise adjustment pins 240 for adjusting the position of a connector assembly. In particular, when the head unit 200 is inserted into the mounting frame assembly 100, the pins 240 are inserted into corresponding openings of the first connector assemblies, thereby centering the connector assembly such that the corresponding connectors may connect to each other while finally pressing the head unit 200 into the mounting frame assembly 100 in the second step by rotating the lever 120.

## Claims

1. System, comprising:
a mounting frame assembly (100) for receiving a head unit (200) in a vehicle, and
the head unit (200) insertable into the mounting frame assembly (100);
wherein the mounting frame assembly is fixable to the vehicle and is configured to house one or more first connector assemblies including first electrical and/or optical connectors (150) to be connected to complementary second electrical and/or optical connectors (210) of the head unit (200);
the mounting frame assembly comprises first fixing means (120) for interacting with second fixing means (220) of the head unit (200) and for forcing the head unit (200) into the mounting frame assembly (100) and thereby connecting respective connectors;
the first fixing means (120) comprises a movable first structure (140) configured to interact with a second structure (220) of the second fixing means (220) of the head unit (200) to provide a pressing force of the head unit (200) against the first connectors (150) when the first structure (140) is moved; and
the first structure is rotatable around a joint of the mounting frame assembly and comprises a protrusion (140) configured to be slidably received in a guiding region (220) of the head unit, wherein the guiding region (220) comprises a straight part (200a) and a curved part (200b);
**characterized in that**
the first fixing means comprises a manually operable lever (120), the manually operable lever comprising the protrusion (140); and
the mounting frame assembly and the head unit are configured, when the protrusion (140) is engaging the guiding region (220) along the straight part (200a), to slidably receive the head unit (200) in the mounting frame assembly (100) up to an intermediate position and, when the protrusion (140) has come out of engagement with the straight part (220a) to come into engagement with the curved part (220b) and to slide along the curved part (200b), the head unit is forced into a final position while operating the lever (120) in a first direction and thereby connecting the one or more first connector assemblies to respective second connectors (210) of the head unit, and wherein the mounting frame assembly and the head unit are configured to force the head unit (200) from its final position to the intermediate position while operating the lever (120) in a second direction opposite to the first direction to drive the protrusion (140) along the curved part (220b) back towards the straight part (220a) to thereby disconnect the one or more first connectors from the respective second connectors.

2. System according to claim 1, wherein the mounting frame assembly is configured to house the first connectors movably in a direction transverse to an insertion direction of the head unit into the mounting frame assembly.

3. System according to claim 1 or 2, the head unit further comprising adjustment pins for adjusting the position of the first connectors while being inserted into corresponding openings of one or more first connector assemblies including the first connectors.

## Patentansprüche

1. System, umfassend:
eine Montagerahmenanordnung (100) für die Aufnahme einer Bedieneinheit (200) in ein Fahrzeug, und
die Bedieneinheit (200), die in die Montagerahmenanordnung (100) einsetzbar ist;
wobei die Montagerahmenanordnung an dem Fahrzeug befestigt werden kann und so konzipiert ist, dass sie mindestens eine erste Steckverbindung enthält, die erste elektrische und/oder optische Stecker (150) aufweist, die mit ergänzenden zweiten elektrischen und/oder optischen Steckern (210) der Bedieneinheit (200) verbunden werden können;
wobei die Montagerahmenanordnung ein erstes Befestigungselement (120) umfasst, um mit einem zweiten Befestigungselement (220) der Bedieneinheit (200) zusammenzuwirken und um die Bedieneinheit (200) in die Montagerahmenanordnung (100) zu pressen und dadurch die entsprechenden Stecker zu verbinden;
wobei das erste Befestigungselement (120) eine bewegliche erste Struktur (140) umfasst, die so konzipiert ist, dass sie mit einer zweiten Struktur (220) des zweiten Befestigungselements (220) der Bedieneinheit (200) zusammenwirkt, um eine Presskraft der Bedieneinheit (200) auf die ersten Stecker (150) auszuüben, wenn die erste Struktur (140) bewegt wird; und
wobei die erste Struktur um ein Gelenk der Montagerahmenanordnung drehbar ist und einen Vorsprung (140) umfasst, der so konzipiert ist, dass er gleitend in einen Führungsbereich (220) der Bedieneinheit aufgenommen werden kann, wobei der Führungsbereich (220) einen geraden Teil (200a) und einen gekrümmten Teil (200b) umfasst;
**dadurch gekennzeichnet, dass**
das erste Befestigungselement einen manuell bedienbaren Hebel (120) umfasst, wobei der manuell bedienbare Hebel den Vorsprung (140) umfasst; und
wobei die Montagerahmenanordnung und die Bedieneinheit so konzipiert sind, dass sie, wenn der Vorsprung (140) den Führungsbereich (220) entlang des geraden Teils (200a) in Eingriff nimmt, die Bedieneinheit (200) bis zu einer Mittelposition gleitend in die Montagerahmenanordnung (100) aufnehmen, und dass, wenn der Vorsprung (140) mit dem geraden Teil (220a) außer Eingriff kommt, um mit dem gekrümmten Teil (220b) in Eingriff zu kommen und entlang des gekrümmten Teils (200b) zu gleiten, die Bedieneinheit, während der Hebel (120) in eine erste Richtung betätigt und somit die mindestens eine erste Steckverbindung mit den entsprechenden zweiten Steckern (210) der Bedieneinheit verbindet, in eine Endposition gepresst wird, und wobei die Montagerahmenanordnung und die Bedieneinheit so konzipiert sind, dass sie die Bedieneinheit (200) aus ihrer Endposition in die Mittelposition pressen, während der Hebel (120) in eine zweite Richtung entgegen der ersten Richtung betätigt wird, um den Vorsprung (140) entlang des gekrümmten Teils (220b) zurück in Richtung des geraden Teils (220a) zu verschieben, um dadurch den mindestens einen ersten Stecker von den entsprechenden zweiten Steckern zu trennen.

2. System nach Anspruch 1, wobei die Montagerahmenanordnung so konzipiert ist, dass sie die ersten Stecker in eine Richtung quer zu einer Einsatzrichtung der Bedieneinheit in die Montagerahmenanordnung beweglich enthält.

3. System nach Anspruch 1 oder 2, wobei die Bedieneinheit ferner Einstellstifte für das Einstellen der Position der ersten Stecker umfasst, während diese in entsprechende Öffnungen von mindestens einer ersten Steckverbindung, die die ersten Stecker aufweist, eingesetzt werden.

## Revendications

1. Système comprenant :
un ensemble de cadre de montage (100) pour la réception d'une unité de tête (200) dans un véhicule et
l'unité de tête (200) pouvant être insérée dans l'ensemble de cadre de montage (100) ;
dans lequel l'ensemble de cadre de montage peut être fixé au véhicule et est configuré pour loger un ou plusieurs ensembles de premiers connecteurs incluant des premiers connecteurs électriques et/ou optiques (150) à connecter à des seconds connecteurs électriques et/ou optiques (210) complémentaires de l'unité de tête (200) ;
l'ensemble de cadre de montage comprend un premier moyen de fixation (120) pour l'interaction avec un second moyen de fixation (220) de l'unité de tête (200) et pour la poussée de l'unité de tête (200) dans l'ensemble de cadre de montage (100) et reliant par là-même des connecteurs respectifs ;
le premier moyen de fixation (120) comprend une première structure mobile (140) configurée pour interagir avec une seconde structure (220) du second moyen de fixation (220) de l'unité de tête (200) afin de fournir une force de pressage de l'unité de tête (200) contre les premiers connecteurs (150) lorsque la première structure (140) est déplacée ; et
la première structure peut être tournée autour d'un joint de l'ensemble de cadre de montage et comprend une saillie (140) configurée pour être reçue par glissement dans une région de guidage (220) de l'unité de tête, dans lequel la région de guidage (220) comprend une partie droite (200a) et une partie courbée (200b) ;
**caractérisé en ce que**
le premier moyen de fixation comprend un levier actionnable manuellement (120), le levier actionnable manuellement comprenant la saillie (140) ; et
l'ensemble de cadre de montage et l'unité de tête sont configurés, lorsque la saillie (140) entre en contact avec la région de guidage (220) le long de la partie droite (200a), pour recevoir par glissement l'unité de tête (200) dans l'ensemble de cadre de montage (100) jusqu'à une position intermédiaire et lorsque la saillie (140) s'est désengagée de la partie droite (220a) pour venir en engagement avec la partie courbée (220b) et pour glisser le long de la partie courbée (200b), l'unité de tête est poussée dans une position finale pendant l'actionnement du levier (120) dans une première direction et reliant par là-même l'un ou plusieurs ensembles de premiers connecteurs aux seconds connecteurs respectifs (210) de l'unité de tête, et dans lequel l'ensemble de cadre de montage et l'unité de tête sont configurés pour pousser l'unité de tête (200) de sa position finale à la position intermédiaire pendant l'actionnement du levier (120) dans une seconde direction opposée à la première direction pour entraîner la saillie (140) le long de la partie courbée (220b) vers l'arrière vers la partie droite (220a) pour déconnecter par là-même l'un ou plusieurs premiers connecteurs des seconds connecteurs respectifs.

2. Système selon la revendication 1, dans lequel l'ensemble de cadre de montage est configuré pour loger les premiers connecteurs de manière mobile dans une direction transversale à une direction d'insertion de l'unité de tête dans l'ensemble de cadre de montage.

3. Système selon la revendication 1 ou 2, l'unité de tête comprenant en outre des goupilles de réglage pour le réglage de la position des premiers connecteurs lors de leur insertion dans des ouvertures correspondantes d'un ou plusieurs ensembles de premiers connecteurs incluant les premiers connecteurs.
